# EUROPÄISCHE PATENTSCHRIFT

(11) **EP 0 476 281 B1**
(45) Veröffentlichungstag und Bekanntmachung des Hinweises auf die Patenterteilung: **11.01.1995**
(21) Anmeldenummer: 91112855.1
(22) Anmeldetag: 31.07.1991
(51) Int. Cl.: B01D 36/04

(54) **Anlage zum Reinigen von Sink- und/oder Schwimmstoffe enthaltenden Abwässern**
Purification device for waste water loaded with deposit and/or floating material
Installation de purification pour l'eau chargée de matières sedimentaires et/ou surnageantes

(30) Priorität: 07.09.1990 DE 4028458
(43) Veröffentlichungstag der Anmeldung: 25.03.1992
(73) Patentinhaber: PASSAVANT-WERKE AG, 65322 Aarbergen 7 (DE)
(72) Erfinder: Seel, Karl, W-6209 Aarbergen 3 (DE)

(56) Entgegenhaltungen:
- DE-A- 1 198 751
- DE-A- 3 300 103
- US-A- 2 860 785
- US-A- 3 792 773

## Beschreibung

Die Erfindung bezieht sich auf eine Anlage zum Reinigen von Sink- und/oder Schwimmstoffe, z.B. Fette und Schlächtereigrobstoffe, enthaltenden Abwässern. Derartige Abwässer werden vorteilhafterweise in einer Trommel- oder Bandsiebmaschine vorgereinigt und die Siebdurchgänge einem nachgeschalteten Beruhigungsbecken aufgegeben, das auch mit einer Flotationseinrichtung versehen sein kann (DE-A 33 00 103).

Ein Problem bei der Behandlung der Abwässer ist der unregelmäßige Anfall. Sowohl die Siebmaschine als auch das Beruhigungs- bez. Flotationsbecken müssen auf die Spitzenbelastung ausgelegt werden. Aus diesem Nachteil leitet sich die Aufgabe ab, die Reinigungsanlage so zu modifizieren, daß der Abwasseranfall vergleichmäßigt und die Anlage kleiner ausgelegt werden kann. Die Lösung dieser Aufgabe gelingt dadurch, daß der Zulauf zum Flotations- und Beruhigungsbecken eine auf seine Auslegungsmenge einstellbare Drosseleinrichtung erhält und daß die Siebmaschine einen siebdurchgangseitigen Überlauf für von der Drosseleinrichtung nicht durchgelassene Abwassermengen aufweist, der in ein Zwischenspeicherbecken führt, das von einer zu der Beschickungsseite der Siebmaschine pumpenden Rückpumpe besaught wird. Es werden also jetzt sowohl die Siebmaschine als auch das Beruhigungsbecken mit einer mittleren Abwassermenge beaufschlagt. Diese können demnach kleiner ausgelegt werden. Die Anfallspitzen werden gespeichert und in Pausen rückgepumpt. Die Rückpumpe ist dabei ebenfalls auf die zulässige Beschickungsmenge der Siebmaschine ausgelegt.

Das Zwischenspeicherbecken ist vorzugsweise in zwei Abteile unterteilt, die durch eine bodenseitige Überströmöffnung miteinander verbunden sind. Diese Überströmöffnung kann durch einen im Saugabteil den Spiegel abtastenden Niveauschalter gesteuert werden. Auf diese Weise kann Überlaufwasser aus dem Auffangabteil nachströmen, sobald der Spiegel im Absaugabteil sinkt.

Weiter Einzelheiten der erfindungsgemäßen Abscheideranlage gehen aus dem nachfolgend erläuterten Ausführungsbeispiel hervor.

Die Siebmaschine ist hier als Spaltsieb-Trommelmaschine 1 ausgebildet, die die Siebübergänge 2 in einen Container 9 abgibt und von den durchfallenden Siebdurchgängen 3 kontinuierlich abgereinigt wird. Das Maschinengehäuse 4 enthält eine Aufgabekammer 5 und eine Staukammer 6 für die Siebdurchgänge 3. Aus der Staukammer 6 fließt das Abwasser über eine regelbare Drosselvorrichtung 7 in das Beruhigungsbecken 8, das hier als Schwerkraftabscheider üblicher Bauart ausgebildet ist.

Beide Kammern der Siebmaschine besitzen obere Überläufe 10, 11, die zusammengeführt und in ein Zwischenspeicherbecken 12 geleitet werden. Dieses Zwischenspeicherbecken 12 ist in zwei Abteile 13, 14 unterteilt, die durch eine bodennahe Überströmöffnung 15 verbunden sind. Die Überströmöffnung wird von einem Schieber 16 kontrolliert, der seinerseits von einem im zweiten Abteil 14 angeordneten Niveauschalter 17 gesteuert wird. Aus dem zweiten Abteil 14, das auch den Abwasserzulauf 18 aufnimmt, saugt die Rückpumpe 19 zurück in die Aufgabekammer 5 der Siebmaschine 1.

Im Betrieb wird, sobald der von Niveauschalter 17 abgetastete Spiegel durch Abpumpen sinkt, die Überströmöffnung 15 geöffnet, so daß das im Auffangabteil 13 gespeicherte Überlaufwasser nachfließen kann. Die Pumpe 19 fördert kontinuierlich, so daß die die Beaufschlagung der Siebmaschine übersteigende Wassermenge im Kreislauf in das Auffangabteil 13 abfließt. In Zulaufpausen wird das dort gespeicherte Wasser abgearbeitet.

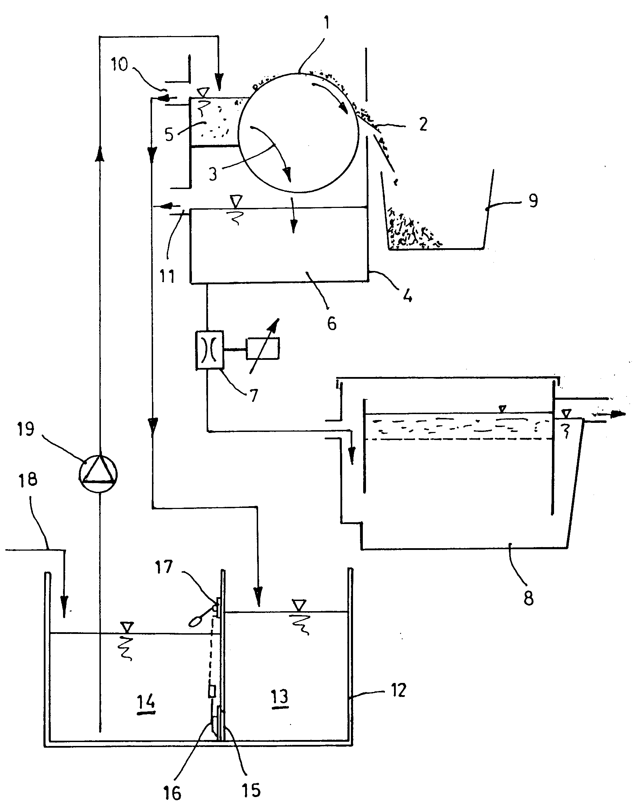

## Patentansprüche

1. Anlage zum Reinigen von Sink- und/oder Schwimmstoffe enthaltenden Abwässern, enthaltend eine Siebmaschine zur Grobabscheidung von Feststoffen und ein nachgeschaltetes Beruhigungs- und/oder Flotationsbecken für die Siebdurchgänge, **dadurch gekennzeichnet**, daß der Zulauf zum Beruhigungs- und/oder Flotationsbecken (8) eine auf seine Auslegungsmenge einstellbare Drosseleinrichtung (7) enthält und daß die Siebmaschine (1) einen siebdurchgangsseitigen Überlauf (11) für von der Drosseleinrichtung (7) nicht durchgelassene Abwassermenge aufweist, der in ein Zwischenspeicherbecken (12) führt, das von einer zu der Beschickungsseite der Siebmaschine (1) pumpenden Rückpumpe (19) besaught wird.

2. Anlage nach Anspruch 1, **dadurch**
**gekennzeichnet**, daß das Zwischenspeicherbecken (12) in zwei Abteile (13, 14) unterteilt ist, die durch eine bodenseitige Überströmöffnung (15) miteinander verbunden sind.

3. Anlage nach Anspruch 2, **dadurch**
**gekennzeichnet**, daß die Überströmöffnung (15) von einem in dem Absaugabteil (14) angeordneten Spiegelschalter (17) gesteuert wird.

4. Anlage nach Anspruch 2 und 3, **dadurch gekennzeichnet**, daß der Abwasserzulauf (18) in das Absaugabteil (14) gelegt ist.

5. Anlagen nach Anspruch 1 bis 4, **dadurch gekennzeichnet**, daß die Siebmaschine (1) beschickungsseitig einen zweiten Überlauf (10) aufweist, der in die siebdurchgangsseitige Überlaufleitung (11) mündet.

## Claims

1. Installation for the treatment of waste water containing suspended and/or settleable solids comprising a screening machine for removal of coarse material, followed by a stilling basin and/or flotation tank for the filtered water, **characterized in that** a throttling device (7), which is adjustable to the dimensioned capacity of the stilling basin and/or flotation tank (8), is placed in its inlet and that the screening machine (1) is equiped with an overflow (11), located at effluent side for the filtered water, for the waste water which could not pass the throttling device (7) and which discharges into a buffer tank (12) from where the waste water is drawn off again by a pump (19) and returned to the influent side of the screening machine (1).

2. Installation according to claim 1, **characterized in that** the buffer tank (12) is divided into two chambers (13,14) which are linked by a by-pass (15) at the tank floor.

3. Installation according to claim 2, **characterized in that** the by-pass (15) is controlled by a reflector switch (17) positioned in the chamber from which the water is drawn off, the suction chamber (14).

4. Installation according to claims 2 and 3, **characterized in that** the waste water flow (18) is directed into the suction chamber (14).

5. Installation according to claim 1 through 4, **characterized in that** the screening machine (1) is provided with a second overflow (10) at the influent side which discharges into the overflow pipe (11) at the effluent side.

## Revendications

1. Installation pour le traitement des eaux usées contenant des matières suspendues et sédimentées comprenant un appareil à tamiser pour la séparation des matières solides grosses, suivi d'un bassin d'apaisement et/ou de flottation pour l'eau filtrée **caracterisée en ce que** dans la conduite d'amenée au bassin d'apaisement et/ou de flottation (8) se trouve un dispositif de réglage par l'étranglement (7) lequel est ajustable à la capacité dimensionnée du bassin d'apaisement et/ou de flottation, et que l'appareil à tamiser (1) est pourvu d'un déversoir (11) au côté de sortie de l'eau filtrée pour le volume d'eau lequel ne put pas passer le dispositif de réglage par l'étranglement (7), orienté vers un réservoir de retenue d'eau (12) duquel l'eau est refoulée par une pompe (19) au côté d'alimentation de l'appareil à tamiser (1).

2. Installation selon revendication 1 **caracterisée en ce que** le réservoir de retenue d'eau (12) est divisé en deux chambres (13, 14) lesquelles sont reliées par un by-pass (15) au niveau du fond du bassin.

3. Installation selon revendication 2, **caracterisée en ce que** le by-pass (15) est commandé par un interrupteur à réflecteur (17) placé dans la chambre d'aspiration (14).

4. Installation selon les revendications 2 et 3, **caracterisée en ce que** l'amenée des eaux usées (18) se fait dans la chambre d'aspiration (14).

5. Installation selon les revendications 1 à 4, **caracterisée en ce que** l'appareil à tamiser (1) est pourvu d'un deuxième déversoir (10) au côté d'alimentation débouchant dans la conduite-déversoir (11) au côté de sortie de l'eau filtrée.
